# EUROPÄISCHE PATENTSCHRIFT

(11) **EP 2 595 788 B1**
(45) Veröffentlichungstag und Bekanntmachung des Hinweises auf die Patenterteilung: **22.04.2015**
(21) Anmeldenummer: 11728010.7
(22) Anmeldetag: 29.06.2011
(51) Int. Cl.: B29C 47/90

(54) **VERFAHREN ZUR KALIBRIERUNG UND VORRICHTUNG ZUR DURCHFÜHRUNG DES VERFAHRENS**
METHOD OF CALIBRATING AND APPARATUS FOR CARRYING OUT THIS METHOD
PROCÉDÉ DE CALIBRAGE ET DISPOSITIF POUR LA MISE EN OEUVRE DE CE PROCÉDÉ

(30) Priorität: 22.07.2010 AT 12302010
(43) Veröffentlichungstag der Anmeldung: 29.05.2013
(73) Patentinhaber: SMI Service Management Immobilien GmbH, 4550 Kremsmünster (AT)
(72) Erfinder: SCHWAIGER, Meinhard, A-4040 Linz (AT)
(74) Vertreter: Babeluk, Michael
(86) Internationale Anmeldenummer: PCT/EP2011/060922
(87) Internationale Veröffentlichungsnummer: WO 2012/010390

(56) Entgegenhaltungen:
- EP-B1- 1 525 083
- WO-A1-2009/087193
- US-A- 3 169 272
- US-A1- 2006 159 794
- US-B2- 6 401 480

## Beschreibung

Die gegenständliche Erfindung bezieht sich auf ein Verfahren gemäß dem Oberbegriff von Patentanspruch 1.

Kalibrierwerkzeuge für Kunststoffprofile dienen zum definierten Abkühlen und Formgeben des in einer Extrusionsdüse geformten Profilstranges und umfassen mindestens ein Trockenkalibrierwerkzeug und mindestens einen Kalibriertank, der ebenfalls unter Vakuum gesetzt werden kann, und mehrere sogenannten Kalibrierblenden aufweist. Dabei erfolgt die definierte Wärmeabfuhr aus dem Profilstrang im Trockenkaliber mittels Wärmeübertragung von der Profiloberfläche an die mit Kühlwasser gekühlte Innenfläche des Trockenkaliberwerkzeuges und im Kalibriertank erfolgt die Wärmeabfuhr aus dem Profilstrang direkt in das den Profilstrang umströmende Kühlmedium (üblicherweise Kühlwasser). Im Trockenkaliberwerkzeug wird der noch weiche Profilstrang mittels Vakuum an die Innenfläche des Trockenkaliberwerkzeuges angesaugt, wobei die Innenfläche mit der Negativkontur der Profilgeometrie ausgeführt ist, unter Berücksichtigung eines möglichst vollständigen Kontaktes der Profilkontur mit der Negativkontur, damit ein möglichst optimaler und gleichmäßiger Wärmeübergang von der Profiloberflächen an die Trockenkaliberinnenfläche erfolgen kann. Im Kalibriertank wird der Profilstrang in Stützblenden geführt und das Kühlmedium durchströmt in Längsrichtung den Kalibriertank, entzieht dabei dem Profilstrang die restliche, der im vorgelagerten Extruder eingebrachten Wärmeenergie, und mittels eines definierten Vakuums im Kalibriertank wird den Formänderungen infolge Schrumpfvorgängen durch Abkühlung im Profil entgegengewirkt.

Dem Stand der Technik entsprechen Kalibriersysteme, bestehend aus einem oder mehreren Trockenkalibern gefolgt von einem oder mehreren Kalibriertanks. Diese Kalibriertanks bestehen aus einem vakuumdichten Tank, mehreren der Profilform angepasste Stützblenden und an den beiden Stirnseiten das Profil umschließende Abschlussblenden. Kühlmedium wird an einer oder mehreren Stellen im Kalibriertank zugeführt und vorzugsweise an einer (oder mehreren) in Längsrichtung versetzt angeordneten Stelle(n) mittels Unterdruck abgesaugt. Dabei wird das Kühlmedium durch gezielte Strömungsführung in mehr oder weniger stark ausgebildete Turbulenzen versetzt, zwecks Erhöhung der Kühlwirkung. In einer anderen Ausführungsvariante wird das Kühlmedium über eine Vielzahl von Sprühdüsen fein zerstäubt auf die Oberfläche des Profilstranges gesprüht und fließt frei vom Profilstrang auf den Kalibriertankboden ab und wird von dort über eine meist zentrale Absaugleitung mittels Unterdruck aus dem Kalibriertank abgesaugt. Bei allen derartigen Systemen ist im Bereich der Absaugöffnung ein mehr oder weniger hoher Wasserstand und es wird sowohl Luft als auch Wasser gleichzeitig abgesaugt, was zu teilweise unbeherrschbaren Druck-Situationen führt, weil die relativen Wasser-/Luftmengen ständigen Schwankungen unterworfen sind. Bei geringem Luftanteil entsteht ein höherer Strömungswiderstand in der Absaugleitung und der Unterdruck der Absaugleitung schlägt nicht bis zum Kalibriertank durch, während bei höherem Luftanteil der Strömungswiderstand in der Absaugleitung schlagartig absinkt und der Unterdruck aus der Absaugleitung bis in den Kalibriertank durchschlägt. In diesen Fällen entstehen enorme Druckschwankungen, die eine hochqualitative Kalibrierung unmöglich machen. Als einzige Maßnahme, dieses Problem zu umgehen, wird eine Zuführung von Umgebungsluft in den unter Vakuum stehenden Kalibriertank heute angewendet. Dabei wird eine überlagerte Luftströmung erzeugt, die eine "Pufferwirkung" bewirkt und die Druckschwankungen im Vakuum weitestgehend ausgleichen kann. Nachteilig wirkt sich dabei jedoch die Tatsache aus, dass durch die Zuführung einer Luftströmung aus der Umgebungsluft in das Vakuumsystem für die Aufrechterhaltung des Vakuumniveaus ein wesentlich erhöhter Energiebedarf entsteht.

Aus der EP 1 525 083 ist eine Vorrichtung bekannt, die eine Wasserstandsniveauregelung im Kalibriertank bewirkt, so dass ausschließlich Wasser über die Absaugleitung abgesaugt wird und damit unkontrollierte Druckschwankungen vermieden werden können, ohne dass Frischluft zugeführt werden muss. Nachteilig wirkt sich jedoch der enorme apparative und steuerungstechnische Aufwand aus, der eine wirtschaftliche Umsetzung nahezu verhindert.

Aus der US 3,169,272 A ist eine Vorrichtung gemäß dem Oberbegriff des Anspruchs 1 zur Kalibrierung und Kühlung von extrudierten Profilen bekannt, bei der das Kühlmedium über eine Strömungsturbine aus einer Absaugöffnung abgezogen wird. Nachteilig bei dieser Vorrichtung ist, dass sich Druckstöße aus dem Vakuumsystem bis in den Kalibriertank fortpflanzen können und dadurch Störungen bei der Kalibrierung des Profils verursachen können.

Ziel der gegenständlichen Erfindung ist es, ein gleichmäßiges Vakuumniveau innerhalb des Kalibriertanks zu erreichen, auch bei stark schwankenden Wasserstandsniveaus, ohne Anwendung hochkomplexer apparativer und steuerungstechnischer Maßnahmen sowie ohne Zufuhr von Umgebungsluft, um gleichzeitig einen geringstmöglichen Energiebedarf zur Absaugung des Kühlmediums aus dem Kalibriertank und zur Vakuumkalibrierung zu erreichen.

Erfindungsgemäß wird diese Aufgabe durch ein Verfahren mit den Merkmalen von dem kennzeichnenden Teil des Patentanspruchs 1 und eine Vorrichtung mit den Merkmalen von dem kennzeichnenden Teil des Anspruchs 4 gelöst. Dieses Verfahren soll einen innerhalb des Kalibriertanks gleichmäßigen, einfach einstellbaren Unterdruck erzeugen. Dies wird bei gleichzeitig sparsamstem Energieeinsatz dadurch erreicht, dass in der Absaugöffnung eine intensive Verwirbelung des abströmenden Kühlwasser mit dem abgesaugten Luftanteil entsteht. Der Effekt dabei ist, dass eine Art "Luft-Wasser-Kolloid" entsteht, welches den gesamten Querschnitt der Absaugleitung über eine bestimmte Länge im Absaugbereich aus dem Kalibriertank ausfüllt und dabei verhindert, dass der Unterdruck aus dem Absaugsystem in den Kalibriertank durchschlägt und Druckschwankungen verursacht. Auf diese Weise entsteht eine Art "dynamisches Rückschlagventil". Die Verwirbelung kann auf einfachste Weise mit einer kleinen in die Absaugleitung integrierten Strömungsturbine, welche durch die Luftströmung in Rotation versetzt wird, bewirkt werden. Auf diese einfache Weise ist es möglich, ein sehr stabiles Vakuumniveau im Kalibriertank zu erzeugen, auch dann, wenn der Wasserstand in der Absaugkammer stark schwankend ist und der Anteil des Wasserquerschnitts und des Luftquerschnitts in der Absaugöffnung ständig stark variiert.

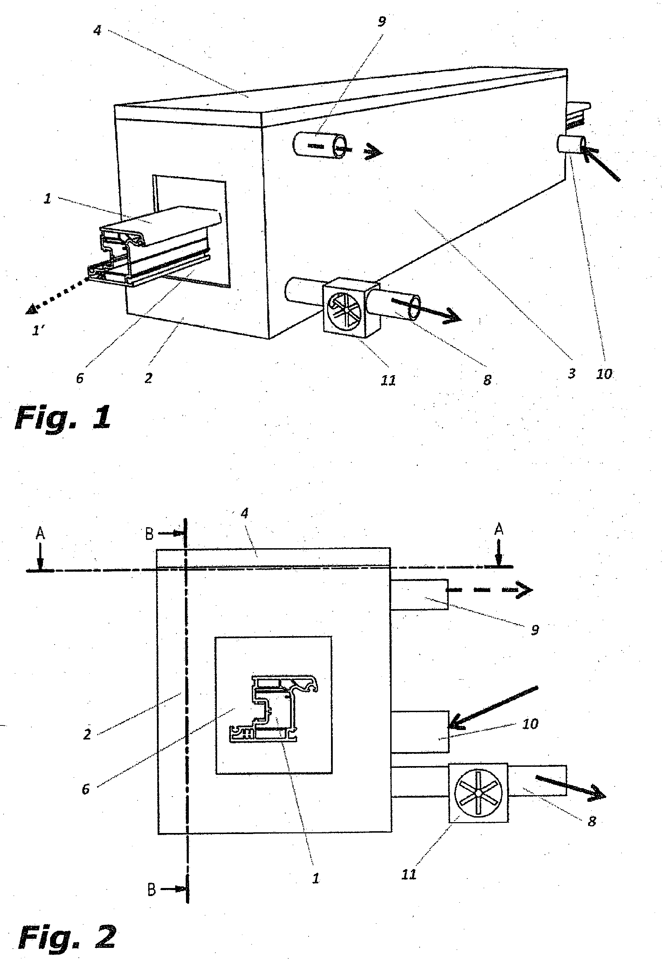

Die Erfindung wird anhand der Figuren 1 bis 5 näher erläutert:
Fig. 1 zeigt einen Kalibriertank (2, 3, 4) mit der erfindungsgemäßen Verwirbelungsturbine (11) in perspektivischer Darstellung. Der endlos im Extrusionsverfahren erzeugte Profilstrang (1) wird in Extrusionsrichtung (1') durch den Kalibriertank, bestehend aus den Stirnseiten (2), den Seitenteilen (3), dem Deckel (4), gefördert, wobei der Profilstrang (1) durch die der Profilkontur angepasste Öffnungen in den Tankblenden und den an den beiden Stirnseiten (2) befindlichen Endblenden (6), die den Kalibriertank nach außen hin abdichten, geführt wird. Im geschlossenen Zustand wird Kühlmedium über die Zuführöffnung (10) in den Kalibriertank gefördert und über die Absaugöffnung (8) abgeleitet; im Inneren des Kalibriertanks wird über die Luftabsaugöffnung (9) ein Unterdruck erzeugt. Abgesaugtes Kühlmedium wird in der Strömungsturbine (11) mit der mitgeförderten Luft verwirbelt.
Fig. 2 zeigt den Kalibriertank von der Stirnseite. Der Tankdeckel (4) ist im Produktionszustand geschlossen.

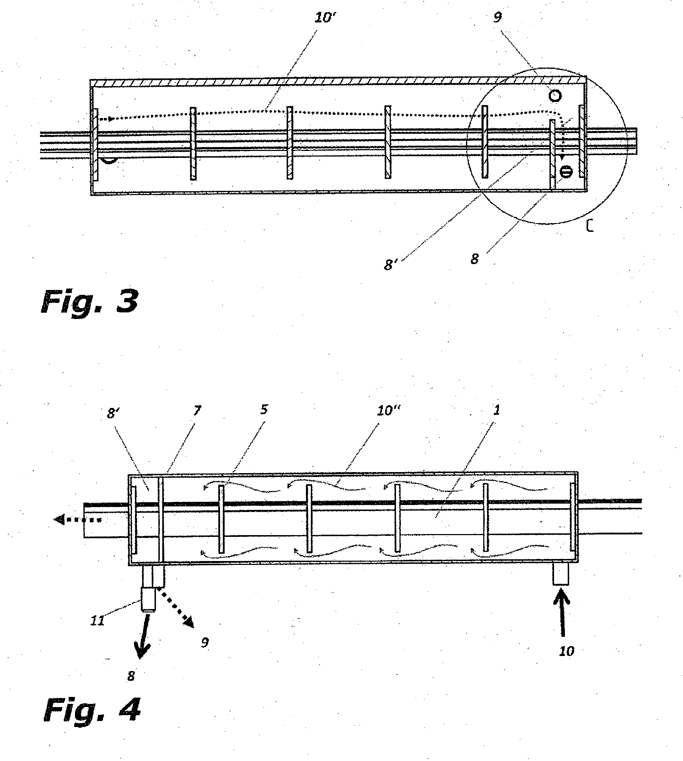

Fig. 3 zeigt einen Längsschnitt (Seitenansicht) des Kalibriertanks entlang der Schnittlinie B-B gemäß Fig. 2. Darin sind die Kühlmedienzufuhr (10), die Kühlmedienströmung (10') oberhalb des Profilstranges (1) sowie der Überlauf der Kühlmedienströmung in die Absaugkammer (8') und die Absaugöffnung (8) dargestellt. Der Unterdruck innerhalb des Kalibriertanks wird mittels der Luftabsaugöffnung (9) erzeugt.
Fig. 4 zeigt einen Längsschnitt (Draufsicht) des Kalibriertanks entlang der Schnittlinie A-A gemäß Fig. 2. Die Tankblenden (5) führen das Profil (1) und das Kühlmedium umspült das Profil (1) in Strömungsrichtung; das Kühlmedium kann dabei entlang der Strömungsfiguren (10") die Tankblenden umströmen. Aus der Absaugkammer (8') wird das Kühlmedium über die Absaugöffnung (8) abgesaugt.

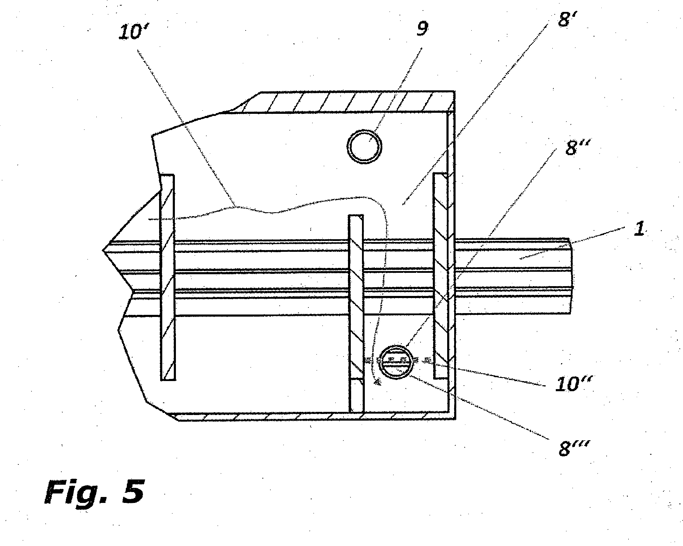

Fig. 5 zeigt eine Detaildarstellung (C) von Fig. 3. In die Absaugkammer (8') fließt das Kühlmedium (10') und bildet ein variierendes Niveau relativ zur Absaugöffnung (8). Dabei entspricht der Querschnittsanteil (8") dem Luftquerschnitt und der Querschnittsanteil (8"') dem Wasseranteil in der Absaugöffnung. Abgesaugtes Kühlmedium und abgesaugte Luft werden in der Strömungsturbine derart verwirbelt, dass ein "Luft-Wasser-Kolloid" entsteht und der gesamte Querschnitt der Absaugöffnung (8) damit ausgefüllt wird, so dass der Unterdruck aus dem nicht näher dargestellten Absaugsystem nicht in den Kalibriertank durchschlagen kann.

## Patentansprüche

1. Verfahren zur Kalibrierung und Kühlung von extrudierten Profilsträngen (1), bei dem aus einem Kalibriertank Kühlmedium über eine Absaugöffnung (8) abgesaugt wird **dadurch gekennzeichnet, dass** eine in einer Absaugleitung integrierte und durch die Luftströmung in Rotation versetztbare wodurch ein im Absaugbereich den gesamten Querschnitt der Absaugleitung ausfüllendes Luft-Wasser-Kolloid erzeugt wird wodurch, der Unterdruck aus dem Absaugsystem nicht in den Kalibriertank durchschlagt.

2. Verfahren nach Anspruch 1, **dadurch gekennzeichnet, dass** im Kalibriertank ein stabiles Vakuum über die Luftabsaugöffnung (9) erzeugt wird.

3. Verfahren nach einem der Ansprüche 1 oder 2, **dadurch gekennzeichnet, dass** das Kühlmedium in einer Absaugkammer (8'), die im Kalibriertank vorgesehen ist, einen schwankenden Pegelstand aufweist.

4. Vorrichtung zur Durchführung eines Verfahrens nach einem der Ansprüche 1 bis 5, mit einem Kalibriertank, der eine Absaugkammer aufweist, **dadurch gekennzeichnet, dass** eine in einer Absaugleitung integrierte und durch die Luftströmung in Rotation versetzbare Strömungsturbine (11) als Flügelradturbine, Schraubenturbine, oder mit sonstigen drehbaren Turbinenelementen ausgebildet ist und ein im Absaugbereich den gesamten Querschnitt der Absaugleitung ausfüllendes Luft-Wasser-Kolloid erzeugbar ist.

5. Vorrichtung nach Anspruch 6, **dadurch gekennzeichnet, dass** die Strömungsturbine (11) mit starren Strömungsleiteinrichtungen ausgeführt ist.

6. Vorrichtung nach einem der Ansprüche 6 oder 7, **dadurch gekennzeichnet, dass** der Kalibriertank als Sprühtank ausgeführt ist

## Claims

1. A method for calibrating and cooling extruded profile strands (1), wherein cooling medium is aspirated from a calibration tank via a suction opening (8), **characterised in that** a flow turbine integrated in a suction line is made to rotate by the air flow, by means of which an air-water colloid filling the entire cross-section of the suction line in the suction zone is generated, as a result of which the negative pressure from the suction system does not propagate to the calibration tank.

2. A method according to claim 1, **characterised in that** a stable vacuum is generated in the calibration tank via the air suction opening (9).

3. A method according to one of the claims 1 or 2, **characterised in that** the cooling medium has a fluctuating level in a suction chamber (8') which is provided in the calibration tank.

4. An apparatus for performing a method according to one of the claims 1 to 3, comprising a calibration tank having a suction chamber, **characterised in that** a flow turbine (11), which is integrated in the suction line and can be made to rotate by the air flow, is arranged as an impeller turbine, a screw turbine, or provided with other rotatable turbine elements, and an air-water colloid can be produced which fills the entire cross-section of the suction line in the suction zone.

5. An apparatus according to claim 4, **characterised in that** the flow turbine (11) is arranged with rigid flow guide devices.

6. An apparatus according to one of the claims 4 or 5, **characterised in that** the calibration tank is arranged as a spraying tank.

## Revendications

1. Procédé de calibrage et de refroidissement de barres profilées extrudées (1) selon lequel on aspire un fluide de refroidissement d'un réservoir de calibrage par une ouverture d'aspiration (8),
**caractérisé en ce qu'**
une turbine à écoulement intégré dans une conduite d'aspiration est mise en rotation par l'écoulement d'air avec pour résultat de produire un colloïde air-eau remplissant la totalité de la section de la conduite d'aspiration dans la zone d'aspiration, et que la dépression provenant du système d'aspiration ne pénètre pas brusquement dans le réservoir de calibrage.

2. Procédé conforme à la revendication 1,
**caractérisé en ce que**
dans le réservoir de calibrage on produit un vide stable par l'ouverture d'aspiration d'air (9).

3. Procédé conforme à l'une des revendications 1 et 2,
**caractérisé en ce que**
le fluide de refroidissement a un niveau instable dans une chambre d'aspiration (8') située dans le réservoir de calibrage.

4. Dispositif permettant la mise en oeuvre du procédé conforme à l'une des revendications 1 à 3, comprenant un réservoir de calibrage équipé d'une chambre d'aspiration,
**caractérisé en ce qu'**
une turbine à écoulement (11) intégrée dans une conduite d'aspiration et susceptible d'être mise en rotation par la circulation d'air et réalisée sous la forme d'une turbine à roue à ailettes, d'une turbine à hélice ou avec d'autres éléments de turbine mobiles en rotation, et un colloïde air-eau remplissant la totalité de la section de la conduite d'aspiration peut être produit dans la zone d'aspiration.

5. Procédé conforme à la revendication 4,
**caractérisé en ce que**
la turbine à écoulement (11) est réalisée avec des dispositifs de guidage d'écoulement rigides.

6. Dispositif conforme à l'une des revendications 4 et 5,
**caractérisé en ce que**
le réservoir de calibrage est réalisé sous la forme d'un réservoir de pulvérisation.
